# DEMANDE DE BREVET EUROPEEN

(11) **EP 4 759 636 A1**
(43) Date de publication de la demande: **17.06.2026**
(21) Numéro de dépôt: 25222085.0
(22) Date de dépôt: 10.12.2025
(51) Int. Cl.: B60R 7/10, A47G 25/14, B60R 11/00, B60N 2/90

(54) **PORTE-VÊTEMENT ÉQUIPÉ D'UN DISPOSITIF D'ACCROCHAGE**

(30) Priorité: 10.12.2024 FR 2413760
(71) Demandeur: Renault s.a.s, 92100 Boulogne Billancourt (FR)
(72) Inventeur: BOUILLON, Jean-Charles, 78280 GUYANCOURT (FR); VERHAEGHE, Antoine, 78280 GUYANCOURT (FR)

(57) **Abrégé**

Le dispositif d'accrochage (5) comporte un élément de connexion (15) configuré pour être assemblé avec un élément de connexion complémentaire (10) d'un support de montage (4), un crochet de renfort (16) configuré pour venir en prise sur le support de montage (4), et un corps principal (12) ayant une première partie (13) portant l'élément de connexion (15) et le crochet de renfort (16), et une deuxième partie (14) fixée à la première partie (13), la première partie (13) et la deuxième partie (14) étant configurées pour se séparer l'une de l'autre lorsqu'une force tendant à écarter la deuxième partie (14) de la première partie (13) dépasse un seuil prédéterminé, ledit porte-vêtement (2) étant solidaire de la deuxième partie.

## Description

### Domaine technique

La présente invention concerne, de manière générale, la fixation sur un support d'un porte-vêtement, notamment dans un habitacle de véhicule automobile.

En particulier, l'invention se rapporte à un porte-vêtement équipé d'un dispositif d'accrochage destiné à coopérer avec un support de montage, le dispositif d'accrochage et le support de montage formant un système de fixation du porte-vêtement.

### Techniques antérieures

On connaît de nombreux systèmes de fixation d'objets ou articles dans l'habitacle ou le coffre d'un véhicule automobile. Ces systèmes de fixation permettent par exemple d'accrocher des porte-gobelets, des portebouteilles, des supports de téléphone ou tout autre objet sur des parois intérieures visibles du véhicule. Ces systèmes de fixation peuvent ainsi permettre de ranger des objets comme ceux précités tout en les rendant facilement accessible à un utilisateur.

Le document FR 3 143 692 décrit notamment un système pour fixer un accessoire à un élément d'un véhicule, le système étant formé par deux parties assemblées par des moyens de fixation amovibles, l'une étant reliée à l'élément du véhicule, et l'autre étant reliée à l'accessoire.

Cependant, un tel système n'est pas adapté pour des portes-vêtements, tels qu'un cintre, pour lesquels le poids supporté en utilisation est souvent plus important que celui des objets précités. Au vu des efforts démultipliés par les porte-à-faux et bras de leviers engendrés par un cintre ou autre porte-vêtement et sa manipulation par l'utilisateur, les systèmes de fixation existant ne s'avèrent pas suffisamment solides. En outre, ces systèmes ne sont pas prévus pour gérer les cas de surcharge risquant de les endommager.

Un but de l'invention est également d'avoir un système débrayable qui soit facilement remontable par l'utilisateur.

### Exposé de l'invention

L'invention a donc pour but de remédier à ces inconvénients et de proposer une solution permettant d'accrocher des portes-vêtements, tel qu'un cintre, notamment dans un habitacle de véhicule automobile.

L'invention propose à cet effet un porte-vêtement équipé d'un dispositif d'accrochage destiné à coopérer par fixation amovible avec un support de montage, caractérisé en ce que le dispositif d'accrochage comporte un corps principal ayant une première partie pourvue d'un élément de connexion et d'un crochet de renfort, l'élément de connexion étant configuré pour être assemblé avec un élément de connexion complémentaire du support de montage, le crochet de renfort étant configuré pour venir en prise sur le support de montage, le corps principal comportant en outre une deuxième partie fixée à la première partie de façon réversible, la deuxième partie et la première partie étant configurées pour se séparer l'une de l'autre lorsqu'une force tendant à écarter la deuxième partie de la première partie dépasse un seuil prédéterminé, ledit porte-vêtement étant solidaire de la deuxième partie.

Ainsi, lorsque la force exercée sur le porte-vêtement dépasse le seuil prédéterminé, la deuxième partie se sépare de la première partie et le porte-vêtement n'est alors plus supporté, préservant ainsi son intégrité ainsi que celle du support de montage.

Il est ainsi possible de fabriquer un porte-vêtement sans avoir à particulièrement renforcer sa structure, ce qui est économique. Le porte-vêtement peut ainsi être par exemple un cintre en fil, plastique ou métallique.

Selon une autre caractéristique, la première partie et la deuxième partie sont fixées l'une à l'autre par un encliquetage réversible.

Selon encore une autre caractéristique, le dispositif d'accrochage comporte en outre une charnière articulant à pivot la première partie et la deuxième partie, la charnière étant située sur le corps principal sensiblement à l'opposé du crochet de renfort.

Selon encore une autre caractéristique, le porte-vêtement présente au moins une portion coudée ayant une première branche orientée transversalement à un axe de pivotement de la charnière et une deuxième branche orientée sensiblement comme l'axe de pivotement de la charnière, la première branche étant au moins partiellement reçue entre la première partie et la deuxième partie.

Selon encore une autre caractéristique, le corps principal est un boîtier dont la première partie et la deuxième partie forment chacune une demi-coquille, le corps principal comportant des nervures internes saillant de la deuxième partie dans l'espace interne au boîtier, le porte-vêtement présentant une portion de fixation reçue entre la première partie et la deuxième partie et positionnée contre les nervures internes.

Avantageusement, lesdites nervures internes présentent à leur extrémité opposée à la deuxième partie des renfoncements configurés pour recevoir ladite portion de fixation.

Avantageusement encore, la portion de fixation est contre les nervures internes au voisinage du crochet de renfort.

Selon une autre caractéristique, le porte-vêtement comporte un cadre plan en fil métallique conformé.

Selon encore une autre caractéristique, le porte-vêtement est un cintre ayant une portion en arche configurée pour imiter la forme générale des épaules d'un corps humain, et une traverse s'étendant d'une première extrémité de l'arche à une deuxième extrémité de l'arche opposée à sa première extrémité, la traverse étant fixée à la deuxième partie.

Selon encore une autre caractéristique, le seuil prédéterminé est d'environ 8 daN.

L'invention concerne en outre un ensemble comportant un porte-vêtement tel que défini ci-dessus, et un support de montage destiné à coopérer par fixation amovible avec un dispositif d'accrochage du porte-vêtement.

### Brève description des dessins

D'autres buts, avantages et caractéristiques ressortiront de la description qui va suivre, donnée à titre purement illustratif et faite en référence aux dessins annexés sur lesquels :
La [Fig 1] représente en vue de côté un porte-vêtement, ici un cintre, équipé d'un dispositif d'accrochage selon l'invention, en cours d'assemblage avec un support de montage équipant un appui-tête de véhicule automobile ;
la [Fig 2] est une vue similaire à la figure 1, le dispositif d'accrochage étant assemblé au support de montage ;
la [Fig 3] est une vue en perspective du support de montage seul ;
la [Fig 4] est une vue en perspective du dispositif d'accrochage seul, montrant sa face avant ;
la [Fig 5] est une vue en perspective du cintre équipé du dispositif d'accrochage, ce dernier ayant une partie avant et une partie arrière séparées l'une de l'autre ;
la [Fig 6] est une vue en perspective de la partie arrière du dispositif d'accrochage, le cintre y étant attaché ;
la [Fig 7] est une vue similaire à la figure 5, le cintre ayant été détaché ;
la [Fig 8] est une vue en perspective de la partie avant du dispositif d'accrochage ; et
la [Fig 9] est une vue en coupe du dispositif d'accrochage, la partie avant et la partie arrière étant assemblées.

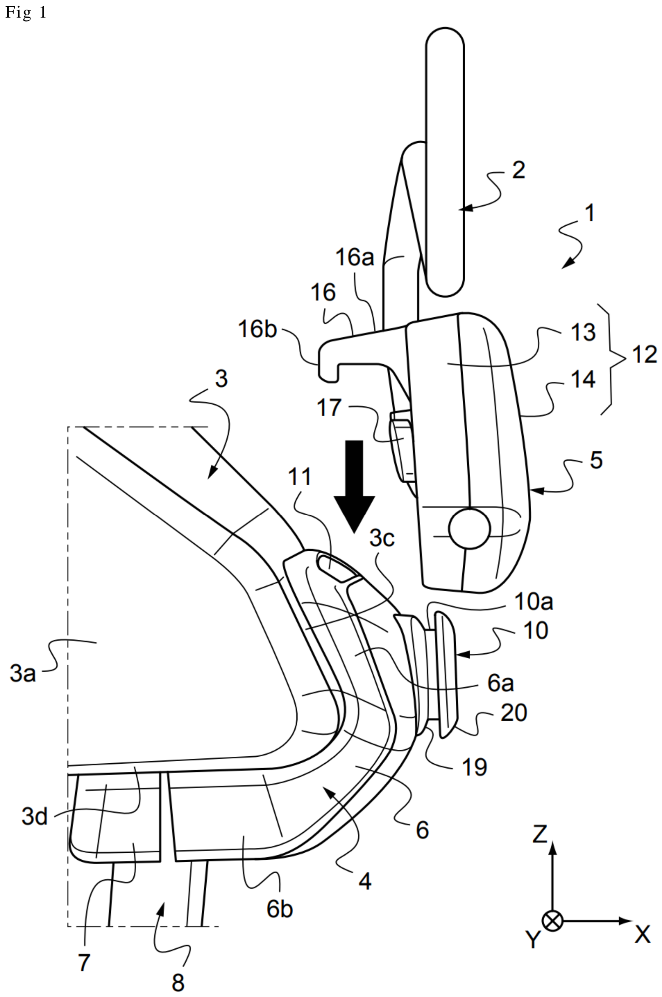

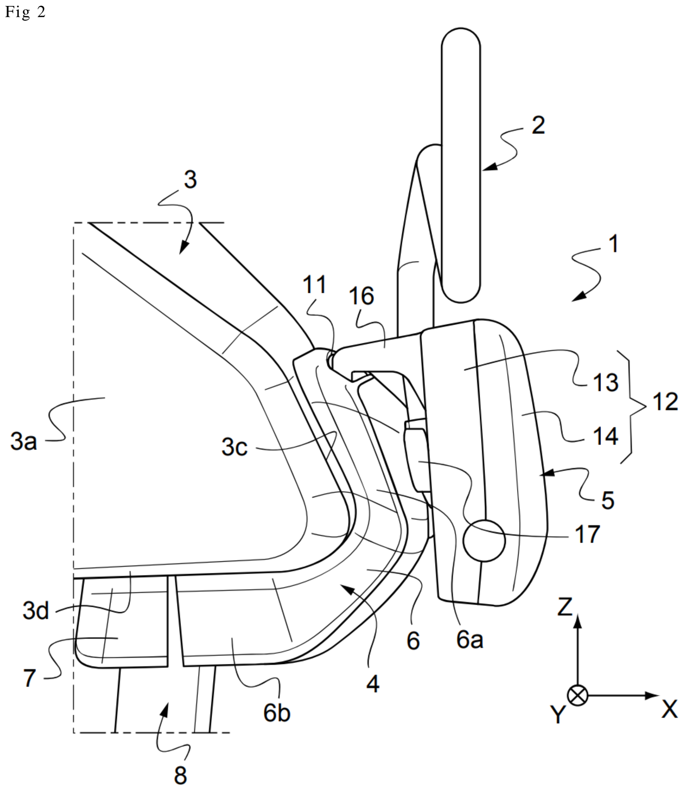

Dans la suite de la description, les termes « longitudinal », « transversal », « vertical », « horizontal », « avant », « arrière », « gauche », « droite », « inférieur », « supérieur », « sous », « sur », « au-dessus » et « au-dessous » s'entendent par rapport au repère orthogonal usuel des véhicules automobiles, représenté sur les figures 1, 2 et 5, et comprenant :
- un axe longitudinal X, horizontal et dirigé de l'avant vers l'arrière du véhicule ;
- un axe transversal Y, horizontal, perpendiculaire à l'axe X et dirigé de la gauche à la droite du véhicule qui se déplace vers l'avant ;

- un axe Z, orthogonal aux axes X et Y et vertical dirigé de bas en haut.

### DESCRIPTION DETAILLEE

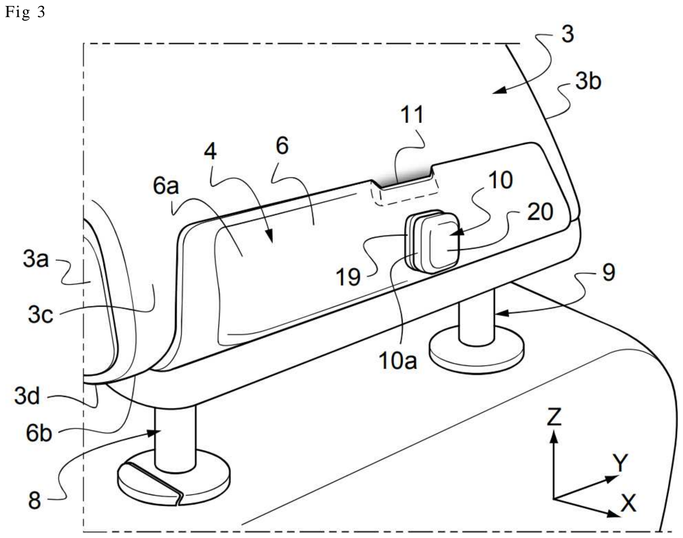

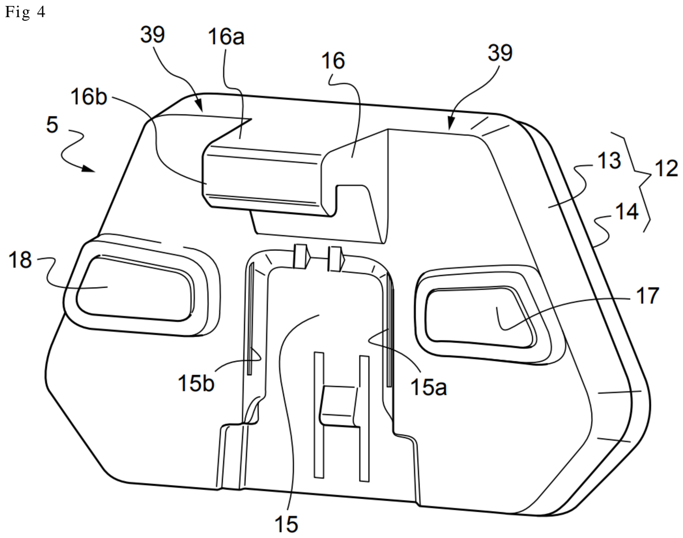

Les figures 1 à 4 illustrent un système de fixation 1 destiné à l'accrochage d'un porte-vêtement, ici un cintre 2, dans l'habitacle d'un véhicule automobile, à l'arrière d'un appui-tête 3 de siège.

Le système de fixation 1 comprend un support de montage 4 et un dispositif d'accrochage 5 destiné à coopérer avec le support de montage 4 par fixation amovible, le cintre 2 étant fixé au dispositif d'accrochage 5.

Le support de montage 4 comprend un corps 6 et des moyens de fixation, de préférence amovible, du support de montage 4 sur l'appui-tête 3.

Dans l'exemple illustré, le corps 6 peut être allongé, s'étendant selon l'axe transversal Y du véhicule, sous la forme d'un bandeau, entre un côté latéral gauche 3a et un côté latéral droit 3b de l'appui-tête 3. Lorsque le support de montage 4 est fixé à l'appui-tête 3, une première portion 6a du corps 6 est configurée pour s'étendre au moins partiellement contre une face arrière 3c de l'appui-tête 3, et une deuxième portion 6b du corps 6, s'étendant depuis la première portion 6a, est configurée pour s'étendre au moins partiellement sur une face inférieure 3d de l'appui-tête 3.

Dans l'exemple illustré, les moyens de fixation du support de montage 4 sur l'appui-tête 3 comprennent deux mâchoires 7 positionnées respectivement autour de la tige de fixation gauche 8 et autour de la tige de fixation droite 9 de l'appui-tête 3. Les mâchoires 7 sont assemblées au corps 6, selon un exemple de réalisation, par des vis. Les mâchoires 7 et le corps 6 du support de montage 4 sont pincés autour des tiges de fixation gauche 8 et droite 9 de l'appui-tête 3 grâce aux vis de manière à maintenir le support de montage 4 en place.

Le support de montage 4 comprend en outre un élément de connexion, ici un élément mâle 10, fixé au centre du corps 6, et une encoche 11, positionnée au-dessus de l'élément mâle 10.

Le dispositif d'accrochage 5 est agencé suivant un plan de symétrie. Ce plan de symétrie est sensiblement parallèle à celui défini par les axes X et Z lorsque le dispositif d'accrochage 5 est assemblé au support de montage 4. En outre, ce plan de symétrie est le même que celui suivant lequel est agencé le cintre 2.

Le dispositif d'accrochage 5 comprend un corps principal 12 ayant une partie avant 13, ou première partie, et une partie arrière 14, ou deuxième partie, fixées l'une à l'autre. La partie avant 13 et la partie arrière 14 sont ici deux demi-coquilles formant ensemble un boîtier creux.

Le corps principal 12 comporte un élément de connexion complémentaire, ici un élément femelle 15, ménagé dans sa partie avant 13 et configuré pour être assemblé par complémentarité avec l'élément mâle 10 du support de montage 4, pour ainsi fixer de manière amovible le dispositif d'accrochage 5 au support de montage 4.

On notera qu'en variante, l'élément mâle 10 peut être porté par le corps principal 12 et l'élément femelle par le support de montage 4.

Dans l'exemple illustré, l'élément femelle 15 est configuré pour être assemblé avec l'élément mâle 10 du support de montage 4 par mouvement de translation, ici suivant l'axe Z et dans un sens allant du haut vers le bas, du dispositif de d'accrochage 5 par rapport au support de montage 4.

A cet égard, l'élément femelle 15 se présente sous la forme d'une empreinte dans laquelle saillent deux nervures 15a, 15b disposées en regard l'une de l'autre et destinées à s'insérer par coulissement dans deux rainures ménagées de part et d'autre de l'élément mâle 10 du support de montage 4.

Dans l'exemple illustré, les deux rainures se rejoignent pour former une rainure unique 10a s'étendant tout autour de l'élément mâle 10.

Dans l'exemple illustré, l'élément mâle 10 est formé par une première partie 19 et une deuxième partie 20 assemblées par des moyens de fixation amovibles. La première partie 19 est reliée, de préférence par des moyens de fixation amovible, au corps 6 du support de montage 4, et la deuxième partie 20 est reliée au dispositif d'accrochage 5. La rainure 10a dans laquelle s'insèrent les nervures 15a, 15b de l'élément femelle 15 du dispositif d'accrochage 5 est formée entre la première partie 19 et la deuxième partie 20 de l'élément mâle 10.

Le dispositif d'accrochage 5 comprend en outre un crochet de renfort 16 configuré pour venir en prise sur le support de montage 4, ici en s'insérant dans l'encoche 11 du support de montage 4.

Le crochet de renfort 16 s'étend depuis la partie avant 13 du corps principal 12. Le crochet de renfort 16 présente une première portion 16a s'étendant depuis la partie avant 13, sensiblement perpendiculairement à la partie avant 13, et une deuxième portion 16b s'étendant depuis la première portion 16a, sensiblement perpendiculairement à la première portion 16a, vers l'élément femelle 15. La deuxième portion 16 s'étend en regard de la partie avant 13.

Le crochet de renfort 16, et notamment la portion 16b, s'insère dans l'encoche 11 au cours du mouvement de translation par lequel l'élément mâle 10 s'assemble avec l'élément femelle 15. Autrement dit, l'assemblage du dispositif d'accrochage 5 et du support de montage 4 ainsi que l'insertion du crochet de renfort 16 dans l'encoche 11 se font par un unique mouvement de translation du dispositif d'accrochage 5.

Lorsque le dispositif d'accrochage 5 est assemblé au support de montage 4, la partie du cintre 2 destinée à supporter un vêtement se trouve plus haut que le dispositif d'accrochage 5 et que le support de montage 4.

Le crochet de renfort 16 constitue un deuxième point d'ancrage entre le dispositif d'accrochage 5 et le support de montage 4, en plus du point d'ancrage constitué par l'élément femelle 15 avec l'élément mâle 10, ce qui est favorable à la stabilité ainsi qu'à la solidité du système de fixation 1, notamment lorsque le vêtement supporté par le cintre 2 est lourd et/ou lorsque le poids du vêtement n'est pas uniformément réparti suivant l'axe Y.

On notera que la présence du crochet de renfort 16 restreint l'utilisation du dispositif d'accrochage 5 à une seule position sur le support de montage 4 et sert ainsi d'élément de détrompage.

En variante, le porte-vêtement peut être différent d'un cintre 2 et peut être par exemple une patère.

Avantageusement, le corps principal 12 comprend deux tampons anti-vibration 17 et 18 positionnés sur la partie avant 13 de part et d'autre de l'élément femelle 15.

Les tampons anti-vibration 17 et 18 sont configurés pour venir en appui sur le support de montage 4 lorsque le dispositif d'accrochage 5 et le support de montage 4 sont assemblés.

Les tampons anti-vibration 17 et 18 permettent de stabiliser le dispositif d'accrochage 5 lors du roulage du véhicule, et limitent la transmission des vibrations au cintre 2.

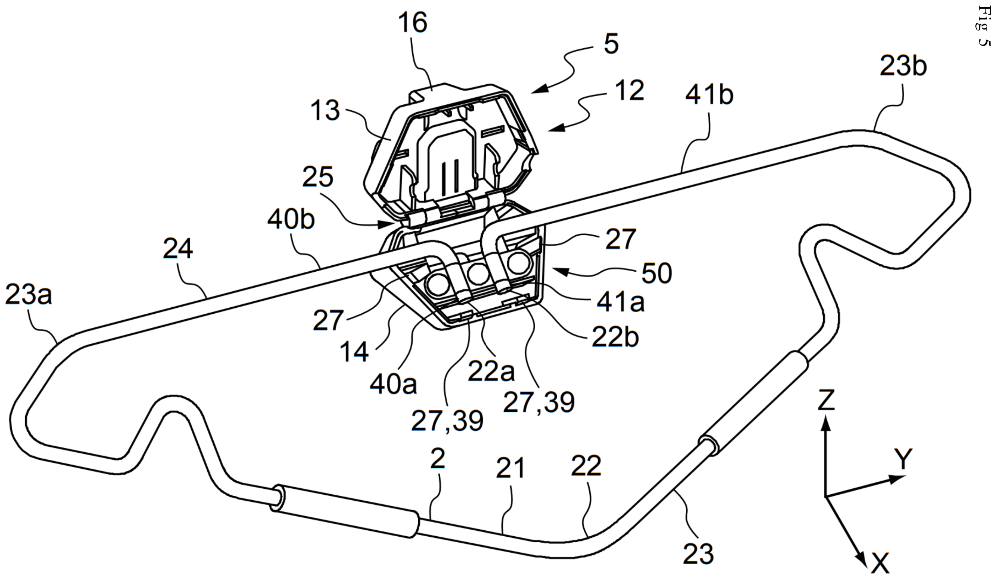

En références aux figures 5 à 9, on va maintenant décrire plus en détails le cintre 2 et le dispositif de connexion 5, ainsi qu'une fonction de débrayage automatique dont est pourvu le dispositif d'accrochage 5 afin de préserver l'intégrité du cintre 2 lorsque les contraintes qui lui sont appliquées dépassent un seuil prédéterminé.

Le cintre 2 comporte un cadre plan 21 présentant une portion en arche 23, configurée pour imiter la forme générale des épaules d'un corps humain, et une traverse 24 s'étendant d'une première extrémité 23a de l'arche 23 à une deuxième extrémité 23b de l'arche 23 opposée à sa première extrémité 23a. La traverse 24 s'étend en regard de l'arche 23, le côté concave de l'arche 23 étant tourné vers la traverse 24.

Le cadre 21 est solidarisé au dispositif d'accrochage 5 par sa traverse 24, cette dernière présentant une portion de fixation 50 fixée au corps 12 du dispositif d'accrochage 5, et plus précisément à sa deuxième partie 14. La portion de fixation 50 est ici reçue dans le boîtier que constitue le corps 12.

Le cadre 21 est ici formé par un unique fil métallique 22 conformé. En variante, le fil est autre que métallique, par exemple en polymère plastique. En variante, le cadre 21 est formé par plusieurs tronçons de fils mis bout à bout et attachés deux à deux, plutôt que par un unique fil.

Le fil 22 s'étend, ici continûment, entre une première extrémité 22a et une deuxième extrémité 22b opposée à la première extrémité 22a.

Plus précisément, le fil 22 présente une première portion coudée 40 et une deuxième portion coudée 41 formant ensemble la traverse 24. Les portions coudées 40 et 41 sont agencées en image miroir l'une de l'autre.

La portion coudée 40 comprend une première branche 40a s'étendant depuis la première extrémité 22a du fil 22, et une deuxième branche 40b s'étendant depuis la première branche 40a, transversalement à cette dernière, jusqu'à la première extrémité 23a de l'arche 23.

La portion coudée 41 comprend une première branche 41a s'étendant depuis la deuxième extrémité 22b du fil 22, et une deuxième branche 41b s'étendant depuis la première branche 41a, transversalement à cette dernière, jusqu'à la deuxième extrémité 23b de l'arche 23.

Les premières branches 40a et 41a sont chacune reçues, ici entièrement, entre la partie avant 13 et la partie arrière 14 du corps 12.

Les deuxièmes branches 40b et 41b sont chacune partiellement reçues entre la première partie 13 et la deuxième partie 14 du corps 21.

La jonction entre la première branche 40a et la deuxième branche 40b, et la jonction entre la première branche 41a et la deuxième branche 41b sont ici chacune reçue entre la première partie 13 et la deuxième partie 14 du corps 21.

Le cintre 2 est ici configuré pour supporter un vêtement dont le poids est inférieur à environ 5 kg, quelles que soient les conditions de roulage.

On va maintenant décrire plus en détail le corps principal 12.

Comme indiqué précédemment, la partie avant 13 et la partie arrière 14 sont chacune une demi-coquille formant ensemble un boîtier creux.

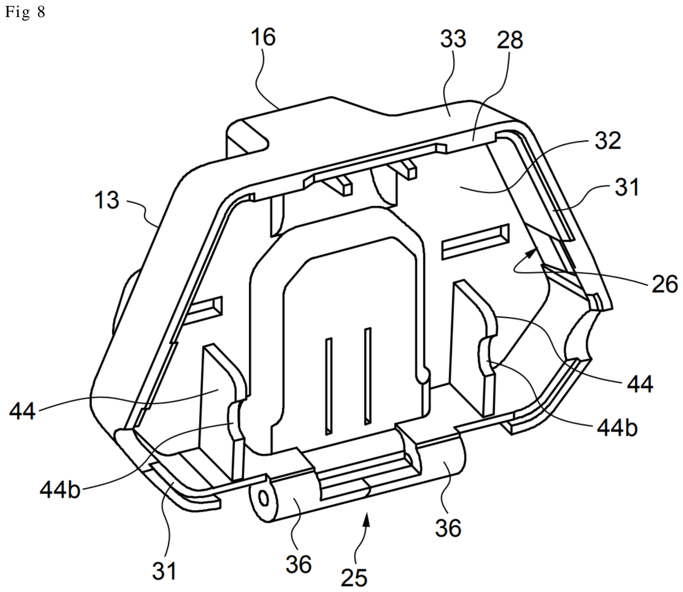

La partie avant 13 (figure 8) présente une paroi de fond 32 et une paroi périphérique 33 s'étendant depuis la paroi de fond 32, transversalement à cette dernière, jusqu'à un bord transversal 28.

La partie arrière 14 présente une paroi de fond 34 et une paroi périphérique 35 s'étendant depuis la paroi de fond 34, transversalement à cette dernière, jusqu'à un bord transversal 29.

Lorsque la partie avant 13 et la partie arrière 14 sont assemblées, le bord transversal 28 et le bord transversal 29 sont l'un contre l'autre.

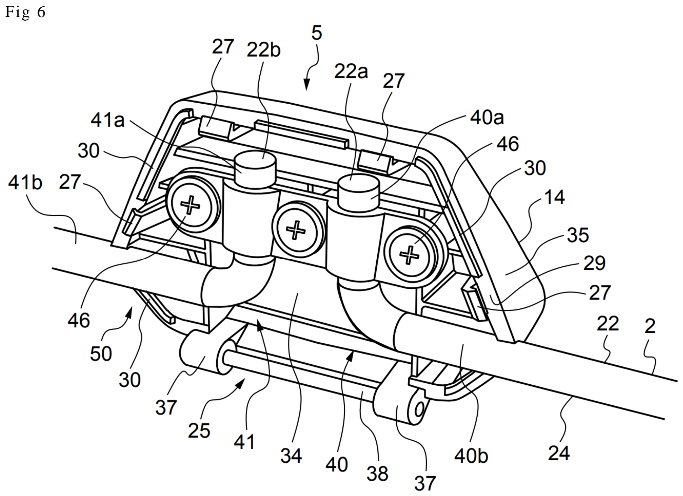

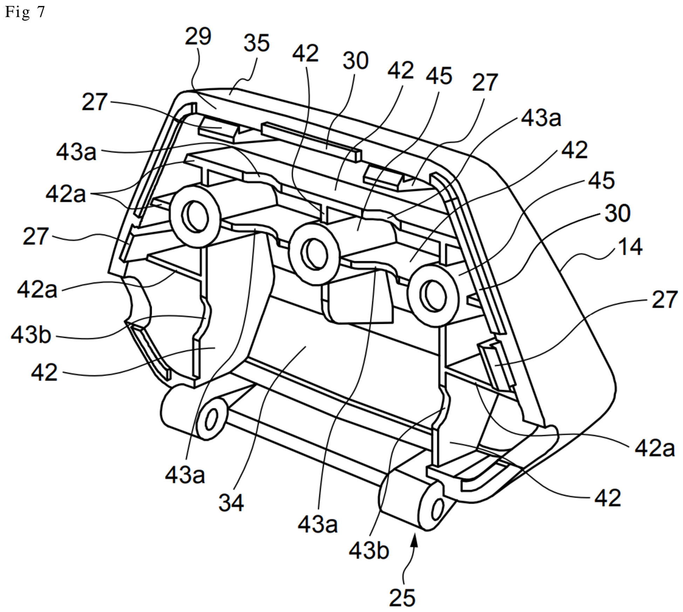

Des nervures 30 (figures 6 et 7) ménagées sur le bord transversal 29 sont configurées pour s'engager dans des rainures 31 (figure 8) ménagées dans le bord transversal 28.

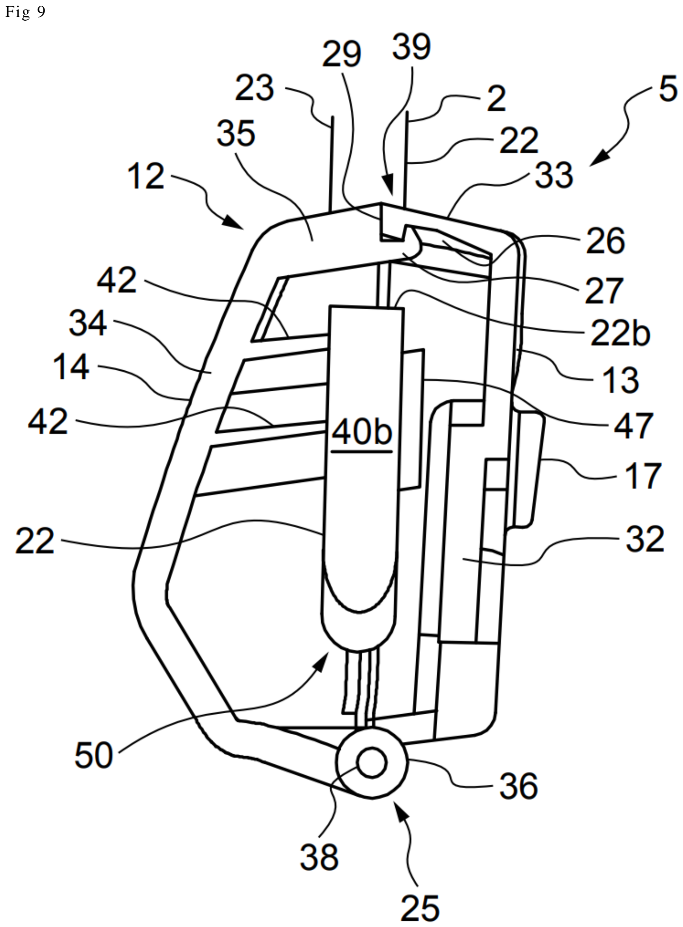

La partie arrière 14 est pourvue d'une pluralité d'organes d'attache ici chacun formé par une languette 27 ménagée sur la paroi périphérique 35 et saillant au-delà du bord transversal 29. La partie avant 13 est pourvue d'une pluralité d'organes d'attache complémentaires ici chacun formé par un renfoncement 26 (figures 8 et 9) ménagé dans la paroi périphérique 33 et configuré pour recevoir une extrémité distale d'une languette 27 correspondante. Les renfoncements 26 et languettes 27 coopèrent par encliquetage.

Les languettes 27 et renfoncements 26 complémentaires sont configurés pour fixer l'une à l'autre et de manière réversible la partie avant 13 et la partie arrière 14.

Les languettes 27 et renfoncements 26 complémentaires sont configurés pour se désaccoupler lorsqu'une force tendant à écarter la partie arrière 14 de la partie avant 13 dépasse un seuil prédéterminé. Ce seuil est ici d'environ 8 daN.

Les languettes 27 sont ici venues de matière avec la partie arrière 14.

Le corps principal 12 comporte ici quatre couples chacun formés par une languette 27 et un renfoncement 26 correspondant, ces couples étant disposés symétriquement sur le corps principal 12, par rapport au plan de symétrie du dispositif d'accrochage 5.

On notera que deux de ces couples 39 sont positionnés à proximité du crochet de renfort 16 et de part et d'autre de ce dernier, lorsque la partie avant 13 et la partie arrière 14 sont assemblées. On notera que deux autres de ces couples 40 sont positionnés sensiblement à l'équateur du corps principal 12, par rapport au pôle que forme le crochet de renfort 16.

En variante, les renfoncements 26 et languettes 27 formant les organes d'attache et organes d'attache complémentaires pourraient être remplacés par exemple par des aimants.

Le dispositif d'accrochage 5 comporte en outre une charnière 25 articulant à pivot la partie avant 13 et la partie arrière 14.

On notera que cette charnière 25 n'est illustrée que sur les figures
5 à 9. On notera encore qu'en variante, le dispositif d'accrochage 5 peut être dépourvu d'une telle charnière.

La charnière 25 comporte des yeux 36 ménagés sur la paroi périphérique 33 de la partie avant 13, des yeux 37 ménagés sur la paroi périphérique 35 de la partie arrière 14, et un axe 38 engagé dans les yeux 36 et 37.

La charnière 25 est située sur le corps principal 12 sensiblement à l'opposé du crochet de renfort 16 (figures 5 et 8). Autrement dit, la charnière 25 est située à un pôle du corps 12 opposé au pôle formé par le crochet de renfort 16.

La charnière 25 retient la partie arrière 14 à la partie avant 13 et permet de guider le mouvement de rapprochement de la partie arrière 14 vers la partie avant 13 lors de leur réassemblage après qu'elles ont été séparées. Ce guidage facilite notamment le ré-encliquetage des languettes 27 avec les renfoncements 26.

L'axe 38 de la charnière 25 est orienté transversalement aux premières branches 40a et 41a des portions coudées 40 et 41, et est orienté sensiblement comme les deuxièmes branches 40b et 41b des portions coudées 40 et 41.

Ainsi, lorsque sous l'effet du poids d'un vêtement, la partie arrière 14 s'est détachée de la partie avant 13, l'utilisateur peut facilement et intuitivement, après avoir retiré le vêtement trop lourd, remettre en place la partie arrière 14 sur la partie avant 13 grâce aux moyens d'encliquetage réversibles. De plus la présence de la charnière 25 permet d'éviter la chute et la perte de la partie 14 sur le plancher du véhicule.

Le corps principal 12 comporte en outre un réseau de nervures internes 42 ménagées sur la partie arrière 14 et s'étendant dans l'espace interne délimité par la paroi de fond 34 et la paroi périphérique 35.

Les nervures 42 saillent de la paroi de fond 34 suivant la même direction que la paroi périphérique 35, jusqu'à une extrémité distale. Les nervures 42 sont entrecroisées. Les nervures 42 sont des nervures de renfort. Le réseau comporte des nervures d'appui 42a saillant depuis la paroi périphérique 35 et rejoignant une autre nervure 42 du réseau.

Des nervures 42 présentent à leur extrémité distale des renfoncements 43a, 43b, ici semi-circulaires, chacun configuré pour recevoir une portion du fil 22. Les renfoncements 43a sont configurés pour recevoir les premières branches 40a et 41a des portions coudées 40 et 41. Les renfoncements 43b sont configurés pour recevoir les deuxièmes branches 40b et 41b des portions coudées 40 et 41.

Le corps principal 12 comporte en outre des nervures internes 44, similaires aux nervures 43, ménagées sur la partie avant 13 et s'étendant dans l'espace interne délimité par la paroi de fond 32 et la paroi périphérique 33.

Les nervures 44 saillent de la paroi de fond 32 suivant la même direction que la paroi périphérique 33, jusqu'à une extrémité distale. Les nervures 44 se raccordent en outre chacune à la paroi périphérique 33.

Les nervures 44 présentent à leur extrémité distale des renfoncements 44b, similaires aux renfoncements 43b, chacun configuré pour recevoir une portion des deuxièmes branches 40b et 41b des portions coudées 40 et 41 du fil 22.

Le dispositif d'accrochage 5 comporte en outre des organes de fixation de la portion de fixation 50 de la traverse 24 sur la partie arrière 14.

Les organes de fixation comportent des fûts 45 ménagés sur la partie arrière 14 et configurés pour recevoir des vis taraudeuses 46, ainsi qu'une barrette 47. Les fûts 45 saillent de la paroi de fond 34 suivant la même direction que la paroi périphérique 35. Les fûts 45 sont intégrés au réseau de nervures 42.

La portion de fixation 50 est reçue dans le corps 12 de sorte que les premières branches 40a et 41a et les deuxièmes branches 40b et 41b sont contre les nervures 42, dans les renfoncements 43a, 43b respectivement.

Les premières branches 40a et 41a sont prise en sandwich entre les nervures 42 et la barrette 47, cette dernière étant serrée contre les branches 40a et 41a par les vis taraudeuses 46 vissées dans les fûts 45.

Comme on le voit bien sur la figure 9, la portion de fixation 50 se trouve sensiblement au droit de la jonction entre la partie avant 13 et la partie arrière 14, où se trouve notamment la charnière 25.

Lorsque le dispositif d'accrochage 5 est assemblé au support de montage 4, les premières branches 40a et 41a sont orientées généralement verticalement tandis que les deuxièmes branches 40b et 41b sont orientées généralement horizontalement.

Lorsqu'un vêtement est pendu sur le cintre 2, le couple généré est transmis par les deuxièmes branches 40b et 41b aux premières branches 40a et 41a.

On notera qu'en pratique, un vêtement tel qu'une veste sera rapportée sur le cintre 2 depuis le côté opposé au support de montage 4, c'est à dire ici depuis l'arrière, de sorte que la plus grande partie du vêtement sera située du côté arrière du dispositif d'accrochage 5. Le couple exercé par le cintre 2 sur les premières branches 40a et 41a aura donc tendance à écarter la partie arrière 14 de la partie avant 13.

On notera qu'une des nervures 42 contre laquelle sont les premières branches 40a et 41a est à proximité immédiate de leurs extrémités 22a et 22b, qui sont elles-mêmes situées au voisinage du crochet de renfort 16 ainsi que des couples 39 d'organes d'attaches qui sont eux aussi au voisinage du crochet de renfort 16. Ceci est favorable à la bonne transmission du couple entre le cintre 2 et les couples de languettes 27 et renfoncements 26.

Si la force tendant à écarter la partie arrière 14 de la partie avant 13 dépasse le seuil prédéterminé, les languettes 27 et les renfoncements 26 se désaccouplent et la partie arrière 14 se sépare de la partie avant 13.

Le cintre 2 n'est alors plus supporté, préservant ainsi son intégrité et celle du support de montage 4.

Le corps principal 12 est ici réalisé en un polymère thermoplastique. Ce polymère est ici un polyamide. Ce polymère est ici en outre renforcé à 30 % de fibre de verre.

## Revendications

1. Porte-vêtement (2) équipé d'un dispositif d'accrochage (5) destiné à coopérer par fixation amovible avec un support de montage (4), **caractérisé en ce que** le dispositif d'accrochage (5) comporte un corps principal (12) ayant une première partie (13) pourvue d'un élément de connexion (15) et d'un crochet de renfort (16), l'élément de connexion (15) étant configuré pour être assemblé avec un élément de connexion complémentaire (10) du support de montage (4), le crochet de renfort (16) étant configuré pour venir en prise sur le support de montage (4), le corps principal (12) comportant en outre une deuxième partie (14) fixée à la première partie (13) de façon réversible, la deuxième partie (14) et la première partie (13) étant configurées pour se séparer l'une de l'autre lorsqu'une force tendant à écarter la deuxième partie (14) de la première partie (13) dépasse un seuil prédéterminé, ledit porte-vêtement (2) étant solidaire de la deuxième partie (14).

2. Porte-vêtement selon la revendication 1, dans lequel la première partie (13) et la deuxième partie (14) sont fixées l'une à l'autre par un encliquetage réversible.

3. Porte-vêtement selon la revendication 1 ou 2, dans lequel le dispositif d'accrochage (5) comporte en outre une charnière (25) articulant à pivot la première partie (13) et la deuxième partie (14), la charnière (25) étant située sur le corps principal (12) sensiblement à l'opposé du crochet de renfort (16).

4. Porte-vêtement selon l'une des revendications 1 à 3, présentant au moins une portion coudée (40, 41) ayant une première branche (40a, 41a) orientée transversalement à un axe (38) de pivotement de la charnière (25) et une deuxième branche (40b, 41b) orientée sensiblement comme l'axe (38) de pivotement de la charnière (25), la première branche (40a, 41a) étant au moins partiellement reçue entre la première partie (13) et la deuxième partie (14).

5. Porte-vêtement selon l'une des revendications 1 à 4, dans lequel le corps principal (12) est un boîtier dont la première partie (13) et la deuxième partie (14) forment chacune une demi-coquille, le corps principal (12) comportant des nervures internes (42) saillant de la deuxième partie (14) dans l'espace interne au boîtier, le porte-vêtement (2) présentant une portion de fixation (50) reçue entre la première partie (13) et la deuxième partie (14) et positionnée contre les nervures internes (42).

6. Porte-vêtement selon la revendication 5, dans lequel lesdites nervures internes (42) présentent à leur extrémité opposée à la deuxième partie (14) des renfoncements (43a, 43b) configurés pour recevoir ladite portion de fixation (50).

7. Porte-vêtement selon la revendication 5 ou 6, dans lequel la portion de fixation (50) est contre les nervures internes (42) au voisinage du crochet de renfort (16).

8. Porte-vêtement selon l'une des revendications 1 à 7, comportant un cadre (21) plan en fil (22) métallique conformé.

9. Porte-vêtement selon l'une des revendications 1 à 8, dans lequel le porte-vêtement est un cintre (2) ayant une portion en arche (23) configurée pour imiter la forme générale des épaules d'un corps humain, et une traverse (24) s'étendant d'une première extrémité (23a) de l'arche (23) à une deuxième extrémité (23b) de l'arche (23) opposée à sa première extrémité (23a), la traverse (24) étant fixée à la deuxième partie (14).

10. Porte-vêtement selon l'une des revendications 1à 9, dans lequel le seuil prédéterminé est d'environ 8 daN.

11. Ensemble comportant un porte-vêtement (2) selon l'une des revendications 1 à 10 et un support de montage (4) destiné à coopérer par fixation amovible avec un dispositif d'accrochage (5) du porte-vêtement (2).
